# EUROPEAN PATENT SPECIFICATION

(11) **EP 4 398 017 B1**
(45) Date of publication and mention of the grant of the patent: **13.08.2025**
(21) Application number: 23215954.1
(22) Date of filing: 12.12.2023
(51) Int. Cl.: G02B 6/44, H01B 9/00, H01B 11/22

(54) **COMPOSITE CABLE FOR OPTO-ELECTRONIC COMMUNICATION**
VERBUNDKABEL FÜR OPTOELEKTRONISCHE KOMMUNIKATION
CÂBLE COMPOSITE POUR COMMUNICATION OPTOÉLECTRONIQUE

(30) Priority: 12.12.2022 CN 202211598657
(43) Date of publication of application: 10.07.2024
(73) Proprietor: Tianjin Middleware Xingong Technology Co., Ltd., Tianjin 301700 (CN)
(72) Inventor: NIU, Huiyuan, Tianjin, 301700 (CN); MENG, Xianhua, Tianjin, 301700 (CN)
(74) Representative: Biallo, Dario

(56) References cited:
- CN-A- 102 956 326
- CN-A- 110 648 785
- US-A- 5 189 718
- US-A1- 2021 358 658
- US-B1- 10 388 429

## Description

### TECHNICAL FIELD

The present disclosure relates to the technical field of composite cables, and in particular to a composite cable for opto-electronic communication.

### BACKGROUND

Cable is the main channel for transmitting various signals. With the gradual aging of cables, accompanied by various factors such as accidental construction damage and illegal destruction by personnel, the failure of signal cables is inevitable. Therefore, more and more attention is paid to the detection of cable faults.

In addition, because most of the signal cables are laid in a concealed manner and have a wide range (long distance), it is difficult to find and handle the faults. Once the faults occur, it will inevitably lead to a long delay, seriously affecting the normal transportation order and use safety. There are many disadvantages in the traditional detection methods: the efficiency is low and the detection accuracy is not high in the process of fault repairing. The traditional detection methods are difficult to deal with these disadvantages.

With the vigorous development of engineering construction industry, cables are widely used in roads, mines, subways and railways. As the traditional power supply cables, signal cables and optical fiber cables are laid separately in the construction process, complicated connection makes connection point easy to be damaged, resulting in various problems such as short service life of the cables. However, the damaged part of the cable is easy to be broken down after being used for a long time or being wetted by the environment, which may also lead to short-circuit failure or fire accident in serious cases.

CN102956326A discloses an all-dry photoelectric composite cable including a cable core, a sheath assembly surrounding the cable core, and a water blocking layer provided between the cable core and the sheath assembly, and is characterized by: The cable core includes an optical cable unit (11), a data communication cable unit and a power line unit (13), and a non-metallic reinforcement (14) is provided in the cable core, The wire unit is twisted on the periphery of the non-metallic reinforcement.

CN110648785A discloses a novel photoelectric composite cable for an indoor wireless distribution system characterized in that it includes two power lines, a data cable, and an optical unit, and the data cable, the optical unit, and an outer periphery formed by twisting two power lines The surface is covered with a polyester tape, the outer periphery of the polyester tape is covered with an outer sheath, the inner cavity of the polyester tape is filled with a filling material, and the data cable is specifically a type 6 network cable or a super type 6 network cable The light unit includes a flame-retardant sheath and an aramid reinforced ring member with a circular cross section arranged in order from the outside to the inside, and an optical fiber is arranged in an inner cavity of the aramid reinforced ring member.

US10388429B1 discloses a hybrid or composite cable including a core component and a plurality of buffer tubes positioned around the core component. The core component may include a plurality of twisted pairs of individually insulated conductors and a filling compound positioned between and around the plurality of twisted pairs. The filling compound may have a density of less than approximately 0.70 g/cm3 and may further include a plurality of microspheres. Each of the plurality of buffer tubes may be configured to house at least one optical fiber. Additionally, a jacket may be formed around the core component and the plurality of buffer tubes.

US5189718A1 discloses a cable in which one tube holding light waveguides is connected by a plastic web to another tube holding metallic current carrying conductors. When buried in the earth, the cable may be located by means of a magnetic field produced by the current carrying conductors, but the cable retains the advantage of the tube carrying the light waveguides being dielectric.

US2021358658A1 discloses a power cable or a hybrid power-data cable including power conductors and a plurality of continuity wires positioned radially outside of the power conductors. The continuity wires are positioned relative to the power conductors such that a cut in the cable will sever one of the plurality of continuity wires before a cut into the power conductors can occur.

### SUMMARY

An objective of the present disclosure is to provide a composite cable for opto-electronic communication, which has the characteristic of high comprehensive performance value.

To achieve the objective above, the present invention employs a composite cable as defined in claim 1.

Preferred embodiments are defined in the dependent claims.

According to specific embodiments of the present disclosure, the present disclosure has the following technical effects:

A composite cable for opto-electronic communication is provided by the present disclosure in accordance with claim 1. The optical cable unit, the multiple power line units and the multiple electrical communication line units are arranged inside the sheath. The optical cable unit, the electrical communication line unit and the power line unit are integrated, so that the composite cable has the characteristic of high comprehensive performance value.

### BRIEF DESCRIPTION OF THE DRAWINGS

To describe the technical solutions in the embodiments of the present disclosure or in the prior art more clearly, the following briefly introduces the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of a sectional structure of a composite cable for opto-electronic communication according to the present disclosure;
FIG. 2 is a schematic diagram of a sectional structure of an optical cable unit according to the present disclosure;
FIG. 3 is a schematic diagram of a sectional structure of a power line unit according to the present disclosure;
FIG. 4 is a schematic diagram of a sectional structure of an electrical communication line unit according to the present disclosure.

In the drawings:
1-optical cable unit; 2-power line unit; 3-electrical communication line unit; 4-second water-blocking wrapping tape layer; 5-polyethylene heat insulation layer; 6-third water-blocking wrapping tape layer; 7-aluminum sheath; 8-polyethylene inner sheath; 9-armor layer; 10-polyethylene outer sheath; 101-first filler; 102-optical fiber; 103-second filler; 104-reinforced core; 105-sleeve; 106-copolymer coated aluminum tape; 201-first conductor; 202-first insulating layer; 203-third filler; 301-second conductor; 302-second insulating layer; 303-first water-blocking wrapping tape layer; 304-shielding layer.

### DETAILED DESCRIPTION OF THE EMBODIMENTS

The following clearly and completely describes the technical solutions in the embodiments of the present disclosure with reference to the accompanying drawings in the embodiments of the present disclosure. Apparently, the described embodiments are merely a part rather than all of the embodiments of the present invention, the scope of the invention being defined by the claims.

An objective of the present disclosure is to provide a composite cable for opto-electronic communication, which has the characteristic of high comprehensive performance value.

In order to make the objectives, technical solutions and advantages of the present disclosure more clearly, the present disclosure is further described in detail below with reference to the embodiments.

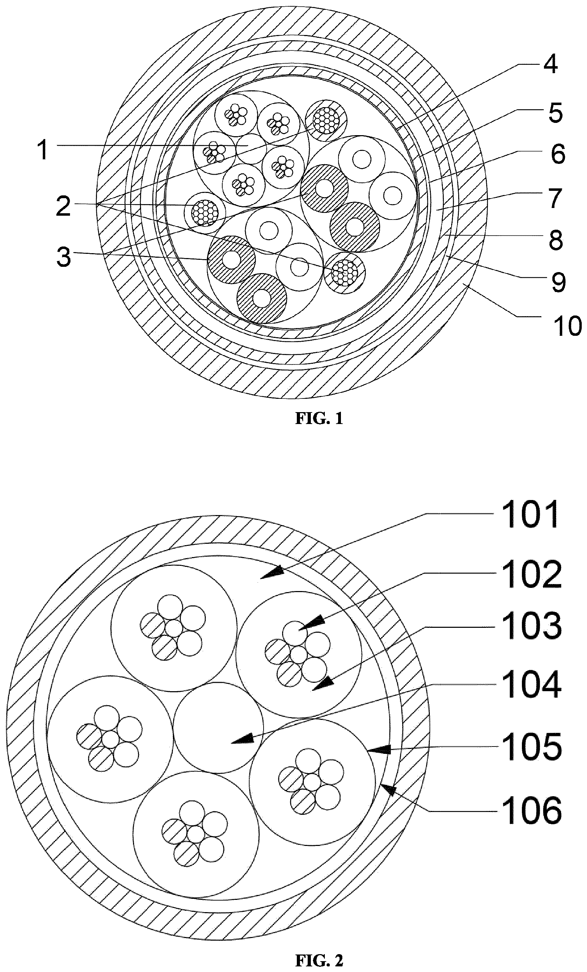

FIG. 1 is a schematic diagram of a sectional structure of a composite cable for opto-electronic communication according to the present disclosure.

As shown in FIG. 1, it is provided a composite cable for opto-electronic communication according to Embodiment 1 of the present disclosure, including a sheath, an optical cable unit 1, multiple electrical communication line units 3, and multiple power line units 2. The optical cable unit 1, the multiple power line units 2 and the multiple electrical communication line units 3 are arranged inside the sheath.

FIG. 2 is a schematic diagram of a sectional structure of an optical cable unit according to the present disclosure.

As shown in FIG. 2, the optical cable unit 1 includes a copolymer coated aluminum tape 106, a reinforced core 104 arranged at the center of the copolymer coated aluminum tape 106, and multiple optical cable subunits which are annularly distributed with the reinforced core 104 as the center. Voids of copolymer coated aluminum tape 106 are filled with a first filler 101. The reinforced core 104 is made of a phosphide steel wire. The optical cable unit 1 further includes a first outer sheath made of low-density polyethylene.

Specifically, the optical cable subunit includes a sleeve 105, and multiple optical fibers 102 concentrically distributed with the center of the sleeve 105 as the center of circle. Each optical fiber 102 is a G652D single-mode optical fiber. Voids in the sleeve 105 are filled with a second filler 103, and the color of the sleeve 105 and the color of the optical fiber 102 are according to the total-chromatographic identification method specified in GB/T13993.2-2014.

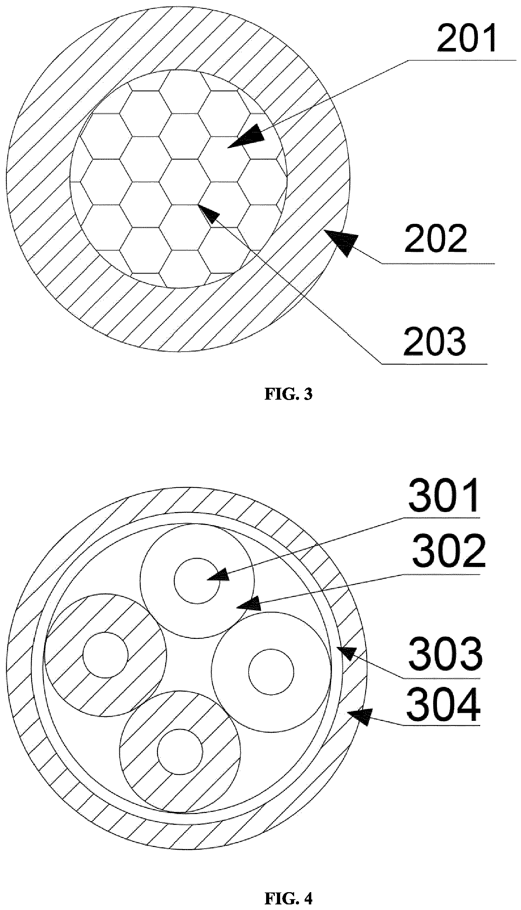

FIG. 3 is a schematic diagram of a sectional structure of a power line unit 2 according to the present disclosure.

As shown in FIG. 3, the power line unit 2 includes a first conductor 201, and a first insulating layer 202.

The first insulating layer 202 is formed by extruding polyethylene to wrap the outer circumferential surface of the first conductor 201, and is closely attached to the outer circumferential surface of the first conductor 201. The first conductor 201 is internally provided with a third filler 203.

**Table 1 Structure size and material list of power line unit 2**

| Item | | Unit | Requirement |
|---|---|---|---|
| The number of cores | | / | 3 |
| Conductor | The number of copper wires | piece | 7 |
| | Diameter of each copper wire | mm | 0.52 |
| | Material | / | Annealed copper wire |
| Insulation | Thickness | mm | 1.0 |
| | Material | / | polyethylene |
| | Color | / | Red, white, blue |
| | Outer diameter | mm | 3.6 |

**Table 2 Physical property table of power line unit 2**

| Name of insulating mixture | | | Polyethylene |
|---|---|---|---|
| Mechanical characteristics before ageing | | | |
| Tensile strength, Minimum (N/*mm*²) | | | 12.5 |
| Elongation at break, Minimum (%) | | | 200 |
| Mechanical characteristics after aging in air oven | | | |
| Treatment: | | Temperature (°C) | 135 |
| | | Tolerance (°C) | ±2 |
| | | Time (h) | 168 |
| Tensile strength : | | | |
| | (a) Minimum value (N/*mm*²) | | |
| | (b) Change , Maximum (%) | | ±25 |
| Elongation at break: | | | - |
| | (a) Minimum value (N/*mm*²) | | ±25 |
| | (b) Change , Maximum (%) | | |

**Table 3 Electrical property table of power line unit 2**

| Serial number | Item | Unit | Indicator |
|---|---|---|---|
| 1 | Maximum direct current resistance of conductor at 20°C | Ω/km | 12.1 |
| 2 | Alternating voltage test (50 Hz) | kV/min | 1.5/5 |
| 3 | Minimum insulation resistance at 20°C | MΩ·km | 1000 |

The first conductor 201 filled in the C3.1 power line unit 2 is composed of seven 0.52 annealed copper wires, the first conductor 201 is filled with the third filler 203, so as to form a full-section water-blocking structure, that is, the water cannot permeate longitudinally in both the first conductor 201 and the first insulating layer 202.

**Table 4 Table of application temperature range of C3.2 power line unit 2**

| | |
|---|---|
| Operating temperature | -40°C to +90°C |
| Storage and transportation temperature | -40°C to +90°C |
| Mounting temperature | -20°C to +70°C |

FIG. 4 is a schematic diagram of a sectional structure of an electrical communication line unit 3 according to the present disclosure.

As shown in FIG. 4, the electrical communication line unit 3 includes a first water-blocking wrapping tape layer 303, multiple line group subunits which are annularly distributed with a center of the first water-blocking wrapping tape layer 303 as the center, and a shielding layer 304 arranged on and closely attached to the periphery of the first water-blocking wrapping tape layer 303. Voids in the first water-blocking wrapping tape layer 303 are filled with the first filler 101.

Specifically, the line group subunit includes a second conductor 301, and a second insulating layer 302.

The second insulating layer 302 is arranged on and closely attached to an outer circumferential surface of the second conductor 301.

Specifically, the line group subunit is a physically foamed insulated single wire, the electrical communication line unit 3 is formed by four physically foamed insulated single wires in a star-quad manner, and the second conductor 301 is made of a flexible bare copper round single wire. The second insulating layer 302 is formed by foaming and extruding high-density polyethylene with high-pressure nitrogen, and is tightly coated on the surface of the second conductor 301. Four physically foamed insulated single wires should be identified and distinguished using different colors. a cable core which is formed by four physically foamed insulated single wires in a star-quad manner is wrapped with the first water-blocking wrapping tape layers 303, where the voids between the first water-blocking wrapping tape 303 and the physically foamed insulated single wires are filled with the first filler 101, multiple line group subunits which are annularly distributed with the center of the first water-blocking wrapping tape layer 303 as the center, and a shielding layer 304 arranged at and closely attached to the periphery of the first water-blocking wrapping tape layer 303. The shielding layer 304 is formed by wrapping a layer of single-sided aluminum foil, and the voids in the first water-blocking wrapping tape layer 303 are filled with the first filler 101. The electrical communication line unit 3 further includes a second outer sheath, which is formed by extruding low-density polyethylene.

**Table 5 Electrical property table of electrical communication line unit 3**

| Serial number | Item | Unit | Indicator |
|---|---|---|---|
| 1 | Direct current resistance of single conductive wire core | Ω/km | ≤28.5 |
| 2 | Four-wire group with DC resistance difference between two lines in an operating pair | Ω | ≤1% |
| 3 | Mutual capacitance of a pair 0.8-1.0 kHz | nF/km | < 40 |
| 4 | Insulation resistance: each wire core is shielded from other wire cores and connected to the metallic sheath | MΩ·km | ≥10000 |
| 5 | Capacitive coupling coefficient 0.8-1.0 kHz K1 | pF/km | |
| | Average value | | |
| | Maximum value | | ≤81 |
| | K9-K12 | | 330 |
| | Average value | | |
| | Maximum value | | ≤168 |
| | | | 236 |
| 6 | Ground capacitance unbalance 0.8-1.0 kHz e1, e2 | pF/km | |
| | Average value | | ≤330 |
| | Maximum value | | 800 |
| 7 | Dielectric strength of insulation 50 HZ 2min | Effective value V | |
| | 1. There is no breakdown between wire cores | | 1000 |
| | 2. Wire cores connected together do not break down the shield and the metallic sheath. | | 1800 |
| Note: 1. The unit of L in the conversion formula is m. e1 and e2 values of 10% of the drums are allowed to be ≤1294 pF/km. | | | |

The executive standard of the electrical communication line unit 3 is:
(1) B4.1 Conductor: GB/T3953 *Round copper wire for electrical purposes*
(2) B4.2 Insulation: GB/T6995 *Markings for electric wires and cables*
(3) B4.3 Sheath: GB/T2952.2 *Protective coverings for electric cables-Part 2: Protective coverings for cables with metallic sheath.*

**Table 6 Table of application temperature range of electrical communication line unit 3**

| | |
|---|---|
| Operating temperature | -40°C to +60°C |
| Storage and transportation temperature | -40°C to +70°C |
| Mounting temperature | -20°C to +60°C |

Specifically, the sheath includes a second water-blocking wrapping tape layer 4, a polyethylene heat insulation layer 5, a third water-blocking wrapping tape layer 6, an aluminum sheath 7, a polyethylene inner sheath 8, an armor layer 9, and a polyethylene outer sheath 10 from inside to outside in turn.

Specifically, voids in the second water-blocking wrapping tape layer 4 are filled with the third filler 203.

Specifically, a connecting point of the composite cable for opto-electronic communication is connected by means of a fusion tool.

Specifically, the first filler 101 is a water-blocking gel, the second filler 102 is filling compound for optical fiber, and the third filler 103 is cable sealant.

**Table 7 Structural table of composite cable for opto-electronic communication**

| Serial number | Item | Unit | Requirement | Material |
|---|---|---|---|---|
| 1 | Outer diameter of cable-core assembly cable | mm | 18.1 | -- |
| 2 | Thickness of water-blocking wrapping | mm | 0.2 | Polyester tape and water-blocking tape |
| 3 | Thickness of heat insulation layer | mm | 1.0 | Polyethylene inner sheath |
| 4 | Thickness of outer water-blocking wrapping layer | mm | 0.2 | Water-blocking tape |
| 5 | Thickness of aluminum sheath | mm | 1.5 | Aluminum tape |
| 6 | Thickness of inner sheath | mm | 1.2 | Polyethylene inner sheath |
| 7 | Thickness of armor layer | mm | 0.5×2 | Galvanized steel strip |
| 8 | Thickness of outer sheath | mm | 2.2 | Polyethylene sheath |
| 9 | Approximate outer diameter of cable | mm | 34.4 | -- |

The cable core of the cable is composed of one group of optical cable units 1, two groups of electrical communication units 3, and three groups of power line units 2, and is overlapped and wrapped with a layer of water-blocking wrapping tape as the second water-blocking wrapping tape layer 4. The third filler 203 is filled between the cable core composed of one group of optical cable units 1, two groups of electrical communication units 3 and three groups of power line units 2 and the second water-blocking wrapping tape layer 4 as a sealing material. A layer of polyethylene is extruded outside the second water-blocking wrapping tape layer 4 as the heat insulation layer 5, and the heat insulation layer 5 is overlapped and wrapped with a layer of water-blocking tape as a third water-blocking wrapping tape layer 6. The third water-blocking wrapping tape layer 6 is further sleeved with an aluminum sheath 7, a nominal thickness of the aluminum sheath is 1.5 mm, and the minimum thickness should not be less than 90% of the nominal thickness. A layer of polyethylene inner sheath 8 is further extruded outside the aluminum sheath 7, with a thickness of about 1.2 mm. The thickness, technical requirements and test methods of the polyethylene inner sheath 8 conform to the Chinese Standard GB2952.2 *Protective coverings for electric cables-Part 2: Protective coverings for cables with metallic sheath.* The armor layer 9 is wrapped outside the polyethylene inner sheath 8, and the armor layer 9 is composed of two layers of galvanized steel strips wrapped with gaps, and the gap of the steel strip is not more than 50% of the strip width, and the gap of the inner steel strip is covered by the part, close to the middle, of the outer steel strip. The technical requirements and test methods of the armor layer 9 conform to the Chinese Standard GB2952.2 *Protective coverings for electric cables-Part 2: Protective coverings for cables with metallic sheath.* A layer of polyethylene outer sheath 10 is extruded outside the armor layer 9, with a thickness of about 2.2 mm. The technical requirements and test methods of the polyethylene outer sheath 10 conform to the Chinese Standard GB2952.2 *Protective coverings for electric cables-Part 2: Protective coverings for cables with metallic sheath.*

After the cable is immersed in water for 24 hours, the electrical property of the outer sheath 10 conforms to the following requirements:

The ground insulation resistance is 500 V, DC is greater than 2000 MΩ·km, the electric withstand voltage strength is 15 kV, and the outer sheath is free of breakdown after DC for 2 min.

A bending radius of the cable is 25 times the cable diameter (static).

**Table 8 Table of application temperature range of cable**

| | |
|---|---|
| Operating temperature | -40°C to +60°C |
| Storage and transportation temperature | -40°C to +70°C |
| Mounting temperature | -20°C to +60°C |

The composite cable for opto-electronic communication provided by the present disclosure has the following beneficial effects:
1. The optical cable unit, the electrical communication line unit and the power line unit are integrated, so that the composite cable has the characteristic of high comprehensive performance value.
2. By means of the special fusion tool, the connecting points can be welded quickly, and the damage to the connecting point is minimized.

Various embodiments in this specification are described in a progressive way, and each embodiment focuses on the differences from other embodiments, so it is only necessary to refer to the same and similar parts between each embodiment.

Specific examples are used herein for illustration of the principles of the present disclosure. The description of the embodiments is merely used to help illustrate the core principles of the present disclosure. In addition, a person of ordinary skill in the art can make various modifications in terms of specific embodiments and scope of application in accordance with the teachings of the present disclosure.

## Claims

1. A composite cable for opto-electronic communication, comprising a sheath, an optical cable unit (1), a plurality of electrical communication line units (3), and a plurality of power line units (2), wherein the optical cable unit (1), the plurality of power line units (2) and the plurality of electrical communication line units (3) are arranged inside the sheath; wherein the optical cable unit (1) comprises a copolymer coated aluminum tape (106), a reinforced core (104) arranged at the center of the copolymer coated aluminum tape (106), and a plurality of optical cable subunits which are annularly distributed with the reinforced core (104) as the center; and voids in the copolymer coated aluminum tape (106) are filled with a first filler (101).

2. The composite cable for opto-electronic communication according to claim 1, wherein the optical cable subunit comprises a sleeve (105) and a plurality of optical fibers (102) which are concentrically distributed with the center of the sleeve (105) as the center of circle, and voids in the sleeve (105) are filled with a second filler (103).

3. The composite cable for opto-electronic communication according to claim 2, wherein the power line unit (2) comprises a first conductor (201) and a first insulating layer (202);
the first insulating layer (202) is arranged on and closely attached to an outer circumferential surface of the first conductor (201); and the first conductor (201) is internally provided with a third filler (203).

4. The composite cable for opto-electronic communication according to claim 3, wherein the sheath comprises a second water-blocking wrapping tape layer (4), a polyethylene heat insulation layer (5), a third water-blocking wrapping tape layer (6), an aluminum sheath (7), a polyethylene inner sheath (8), an armor layer (9), and a polyethylene outer sheath (10) from inside to outside in turn.

5. The composite cable for opto-electronic communication according to claim 4, wherein voids in the second water-blocking wrapping tape layer (4) are filled with the third filler (203).

6. The composite cable for opto-electronic communication according to claim 3, wherein the first filler (101) is water-blocking gel, the second filler (103) is filling compound for optical fiber (102), and the third filler (203) is cable sealant.

## Patentansprüche

1. Verbundkabel für optoelektronische Kommunikation, umfassend einen Mantel, eine optische Kabeleinheit (1), eine Vielzahl von elektrischen Kommunikationsleitungseinheiten (3) und eine Vielzahl von Stromleitungseinheiten (2), wobei die optische Kabeleinheit (1), die Vielzahl von Stromleitungseinheiten (2) und die Vielzahl von elektrischen Kommunikationsleitungseinheiten (3) innerhalb des Mantels angeordnet sind; wobei die optische Kabeleinheit (1) ein copolymerbeschichtetes Aluminiumband (106), einen verstärkten Kern (104), der im Mittelpunkt des copolymerbeschichteten Aluminiumbands (106) angeordnet ist, und eine Vielzahl von optischen Kabeluntereinheiten umfasst, die ringförmig mit dem verstärkten Kern (104) als Mittelpunkt verteilt sind; und Hohlräume in dem copolymerbeschichteten Aluminiumband (106) mit einem ersten Füllstoff (101) gefüllt sind.

2. Verbundkabel für optoelektronische Kommunikation nach Anspruch 1, wobei die optische Kabeluntereinheit eine Hülse (105) und eine Vielzahl von optischen Fasern (102) umfasst, die konzentrisch mit dem Mittelpunkt der Hülse (105) als Kreismittelpunkt verteilt sind, und Hohlräume in der Hülse (105) mit einem zweiten Füllstoff (103) gefüllt sind.

3. Verbundkabel für optoelektronische Kommunikation nach Anspruch 2, wobei die Stromleitungseinheit (2) einen ersten Leiter (201) und eine erste Isolierschicht (202) umfasst;
die erste Isolierschicht (202) auf einer äußeren Umfangsfläche des ersten Leiters (201) angeordnet und eng mit dieser angebracht ist; und der erste Leiter (201) im Inneren mit einem dritten Füllmaterial (203) versehen ist.

4. Verbundkabel für optoelektronische Kommunikation nach Anspruch 3, wobei der Mantel eine zweite wasserblockierende Wickelbandschicht (4), eine Polyethylen-Wärmeisolierschicht (5), eine dritte wasserblockierende Wickelbandschicht (6), einen Aluminiummantel (7), einen Polyethylen-Innenmantel (8), eine Panzerschicht (9) und einen Polyethylen-Außenmantel (10) von innen nach außen der Reihe nach umfasst.

5. Verbundkabel für optoelektronische Kommunikation nach Anspruch 4, wobei Hohlräume in der zweiten wasserblockierenden Wickelbandschicht (4) mit dem dritten Füllstoff (203) gefüllt sind.

6. Verbundkabel für optoelektronische Kommunikation nach Anspruch 3, wobei der erste Füllstoff (101) ein wasserblockierendes Gel ist, der zweite Füllstoff (103) eine Füllmasse für optische Fasern (102) ist und der dritte Füllstoff (203) ein Kabeldichtungsmittel ist.

## Revendications

1. Câble composite pour communication opto-électronique, comprenant une gaine, une unité de câble optique (1), une pluralité d'unités de ligne de communication électrique (3), et une pluralité d'unités de ligne d'alimentation (2), dans lequel l'unité de câble optique (1), la pluralité d'unités de ligne d'alimentation (2) et la pluralité d'unités de ligne de communication électrique (3) sont disposées à l'intérieur de la gaine; l'unité de câble optique (1) comprend un ruban d'aluminium revêtu de copolymère (106), une âme renforcée (104) disposée au centre du ruban d'aluminium revêtu de copolymère (106), et une pluralité de sous-unités de câble optique réparties annulairement avec l'âme renforcée (104) comme centre; et les vides dans le ruban d'aluminium revêtu de copolymère (106) sont remplis d'un premier agent de remplissage (101).

2. Câble composite pour la communication opto-électronique selon la revendication 1, dans lequel la sous-unité de câble optique comprend un manchon (105) et une pluralité de fibres optiques (102) qui sont distribuées concentriquement avec le centre du manchon (105) comme centre du cercle, et les vides dans le manchon (105) sont remplis avec un deuxième agent de remplissage (103).

3. Câble composite pour communication opto-électronique selon la revendication 2, dans lequel l'unité de ligne d'alimentation (2) comprend un premier conducteur (201) et une première couche isolante (202);
la première couche isolante (202) est disposée sur une surface circonférentielle extérieure du premier conducteur (201) et y est étroitement attachée; et le premier conducteur (201) est pourvu à l'intérieur d'une troisième couche de remplissage (203).

4. Câble composite pour communication opto-électronique selon la revendication 3, dans lequel la gaine comprend une deuxième couche de ruban d'emballage bloquant l'eau (4), une couche d'isolation thermique en polyéthylène (5), une troisième couche de ruban d'emballage bloquant l'eau (6), une gaine en aluminium (7), une gaine intérieure en polyéthylène (8), une couche d'armure (9), et une gaine extérieure en polyéthylène (10) de l'intérieur vers l'extérieur à tour de rôle.

5. Câble composite pour communication opto-électronique selon la revendication 4, dans lequel les vides dans la deuxième couche de ruban d'emballage bloquant l'eau (4) sont remplis avec la troisième charge (203).

6. Câble composite pour communication opto-électronique selon la revendication 3, dans lequel la première charge (101) est un gel bloquant l'eau, la deuxième charge (103) est un composé de remplissage pour fibre optique (102), et la troisième charge (203) est un scellant pour câble.
